# EUROPÄISCHE PATENTSCHRIFT

(11) **EP 1 132 264 B1**
(45) Veröffentlichungstag und Bekanntmachung des Hinweises auf die Patenterteilung: **07.04.2004**
(21) Anmeldenummer: 01101029.5
(22) Anmeldetag: 18.01.2001
(51) Int. Cl.: B60R 22/20, B60R 21/055

(54) **Vorrichtung für einen Gurthöhenversteller eines Sicherheitsgurtsystems**
Height adjustment device for a vehicle safety belt system
Dispositif de réglage en hauteur d'une ceinture de sécurité

(30) Priorität: 11.03.2000 DE 10011902
(43) Veröffentlichungstag der Anmeldung: 12.09.2001
(73) Patentinhaber: Dr.Ing. h.c.F. Porsche Aktiengesellschaft, 70435 Stuttgart (DE)
(72) Erfinder: Dietrich, Günter, 71691 Freiberg (DE)

(56) Entgegenhaltungen:
- DE-A- 19 603 367
- US-A- 5 529 344
- US-A- 5 836 613
- US-A- 6 007 100
- US-A- 6 032 982

## Beschreibung

Die Erfindung bezieht sich auf eine Vorrichtung für einen Gurthöhenversteller eines Sicherheitsgurtsystems nach dem Oberbegriff des Anspruchs 1.

Aus der DE 295 19 483 U1 ist eine Vorrichtung für einen Gurthöhenversteller eines Sicherheitsgurtsystems in einem Kraftfahrzeug bekannt, der über eine Rastschiene unter Zwischenschaltung eines Deformationselements an einer Säule eines Fahrzeugaufbaus befestigt ist. Ferner ist aus der DE 196 51 092 A1 eine Sicherheitsgurtvorrichtung für ein Fahrzeug bekannt, die eine Ankerschiene für die Gurtvorrichtung bildet, welche über eine Schraube mit einer Säulenwand des Fahrzeugaufbaus verbunden ist und die Schrauben in einem Aufprall-Absorptionselement gründen. Bei einer Aufprallsituation verformt sich dieses Element und nimmt plastisch Aufprallenergie auf. Des weiteren ist aus der DE 44 05 106 A1 eine Verankerung für einen Sicherheitsgurt bekannt, wobei ein Aufprallabsorptionsteil verwendet wird, das mit einem Ende an einem Rahmen und mit seinem anderen Ende an der Fahrzeugkarosserie gesichert ist und welches durch eine auf den Rahmen einwirkende Belastung deformierbar ist. Aus der US 5,529,344 ist eine Vorrichtung gemäß dem Oberbegriff des Anspruchs 1 bekannt.

Aufgabe der Erfindung ist es, eine Vorrichtung für einen Gurthöhenversteller eines Sicherheitsgurtsystems zu schaffen, die bei einem Kopfaufprall energieabsorbierend wirkt und die Fahrzeugsäule weitestgehend unbeschädigt läßt.

Diese Aufgabe wird erfindungsgemäß durch die Merkmale des Anspruchs 1 gelöst. Weitere vorteilhafte Merkmale beeinhalten die Unteransprüche.

Die mit der Erfindung hauptsächlich erzielten Vorteile bestehen darin, daß kegelförmig ausgeführte Deformationselemente in der Weise zwischen einer Rastschiene der Vorrichtung bzw. einer Trägerplatte der Vorrichtung und einer Säulenwand angeordnet sind, so daß bei einem Kopfaufprall sich die Deformationselemente plastisch bei Vermeidung von Beschädigungen an der Fahrzeugsäule verformen können. Die Befestigung der Rastschiene an der Trägerplatte erfolgt über Schrauben, die mit der Befestigungsplatte verbunden sind, so daß bei einem Kopfaufprall die Befestigungsplatte, welche in einer montierten Betriebsstellung anliegend an der Säulenwand ist, sich bei einem Kopfaufprall in die Säule hinein von der Säulenwand weg verschiebt.

Da die Deformationselemente in einer Ausführung nur eingeklemmt zwischen der Rastschiene und der Säulenwand gehalten werden, ist ein Auswechseln dieser zusammengedrückten Deformationselemente in einfacher Weise möglich. Nach einer weiteren Ausführung sind die Deformationselemente mit einem Ende in der Rastschiene oder in der Trägerplatte durch eine Umbördelung in einer Bohrung gehalten. In diesem Fall wird die gesamte Einheit Rastschiene und Deformationselement bzw. Trägerplatte und Deformationselement ausgewechselt.

Nach der Erfindung kann das Deformationselement bei Entfall der Trägerplatte unmittelbar an der Rastschiene befestigt sein oder aber sich an dieser abstützen, wobei in jedem Fall die Verbindungsschrauben das Deformationselement durchsetzen.

Damit eine Stauchung bzw. plastische Verformung der Deformationselemente bei einem Kopfaufprall stattfinden kann, ist das kegelförmig ausgeführte Deformationselement mit seinem kleinen Durchmesser der Rastschiene bzw. der Trägerplatte zugerichtet und der größere Durchmesser stützt sich an der Säulenwand ab.

Ausführungsbeispiele der Erfindung sind in den Zeichnungen dargestellt und werden im folgenden näher beschrieben.

Es zeigen:
- Fig. 1: eine erste Ausführung einer Vorrichtung für einen Gurthöhenversteller in einem Vertikalschnitt nach der Linie H der Fig. 2 mit Rastschiene, Trägerplatte und kegelförmigen Deformationselementen sowie mit einer Befestigungsplatte,
- Fig. 2: eine Draufsicht auf die Trägerplatte mit Deformationselementen,
- Fig. 3: einen Schnitt nach der Linie III-III der Fig. 2 in vergrößerter Darstellung,
- Fig. 4: einen Horizontalschnitt durch eine Fahrzeugsäule mit eingesetzter Vorrichtung in einer Betriebsstellung und in einer Stellung nach einem Kopfaufprall,
- Fig. 5: eine schaubildliche Darstellung einer weiteren Ausführung der Vorrichtung mit Rastschiene, Deformationselement und Befestigungsplatte, bei Entfall der Trägerplatte und
- Fig. 6: die Vorrichtung im Vertikalschnitt gemäß der Fig. 4 und 5 mit Rastschiene, Deformationselementen und Befestigungsplatte.

Eine Vorrichtung 1 für einen Gurthöhenversteller umfaßt im wesentlichen eine Rastschiene 2, eine Trägerplatte 3, Deformationselemente 4, 5 und eine Befestigungsplatte 6. Über Verbindungsschrauben 9, 10 wird die Baueinheit an einer Säulenwand 11 einer A- und/oder B-Säule des Fahrzeugaufbaus festgesetzt.

Die Schrauben 9, 10 werden in mit der Befestigungsplatte 6 fest verbundenen Schweißmuttern 9a, 10a festgelegt. Hierbei liegt in einer montierten Betriebsstellung I die Befestigungsplatte 6 an der Wandfläche F1 und in einer Stellung II nach einem Kopfaufprall bewegt sich die Befestigungsplatte 6 in einen Freiraum 12 der Säule S von der Fläche F1 weg.

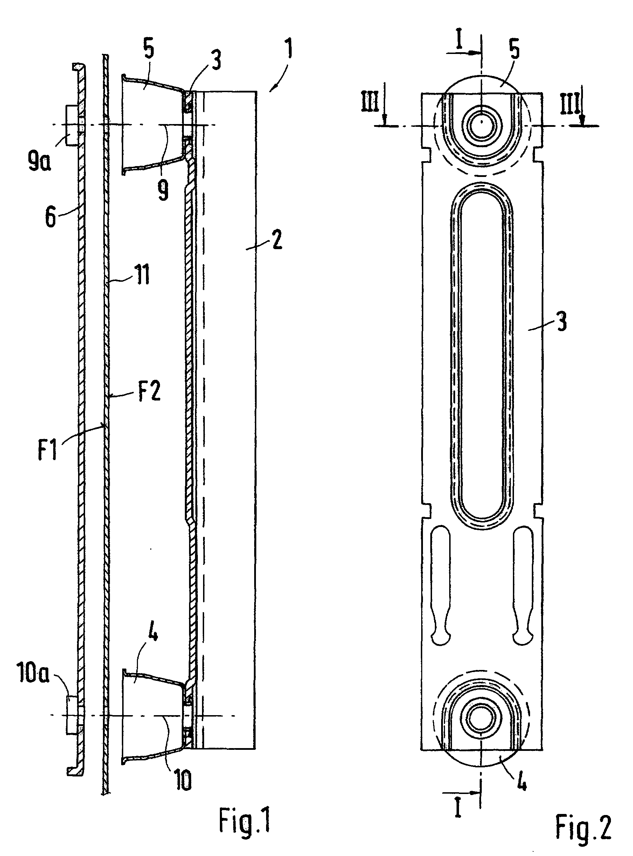

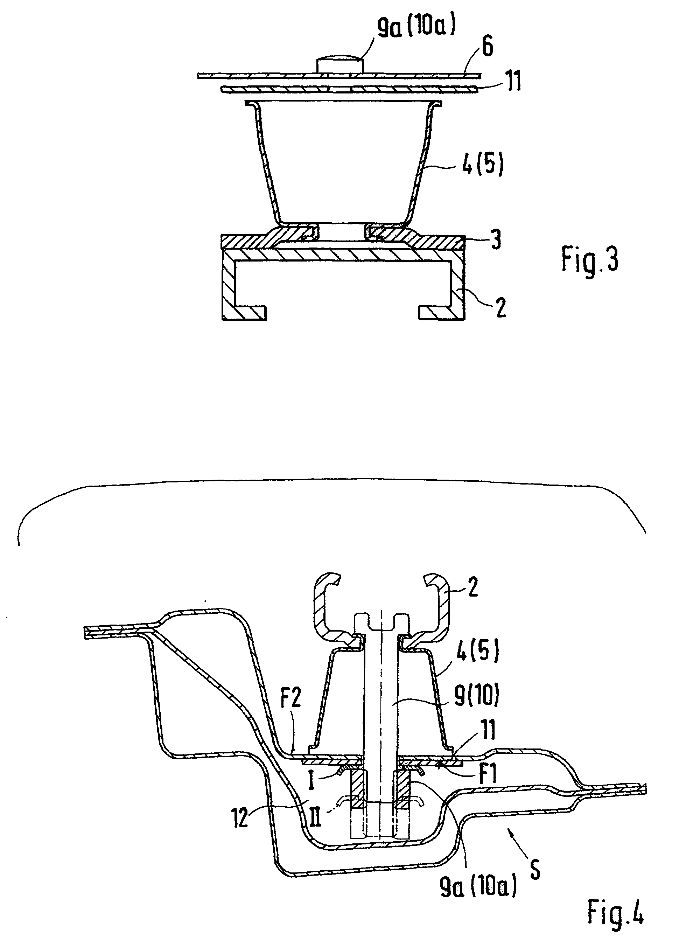

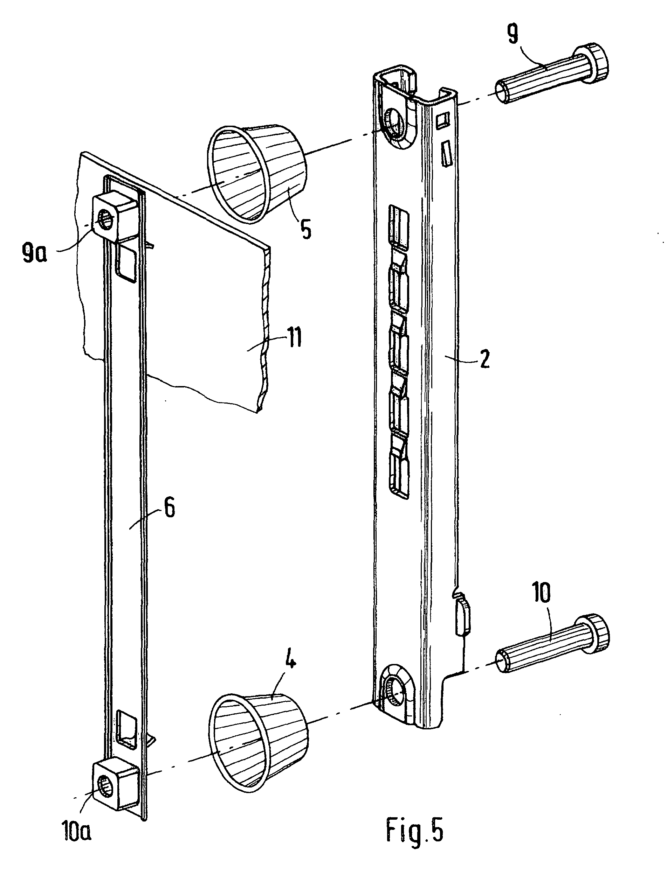

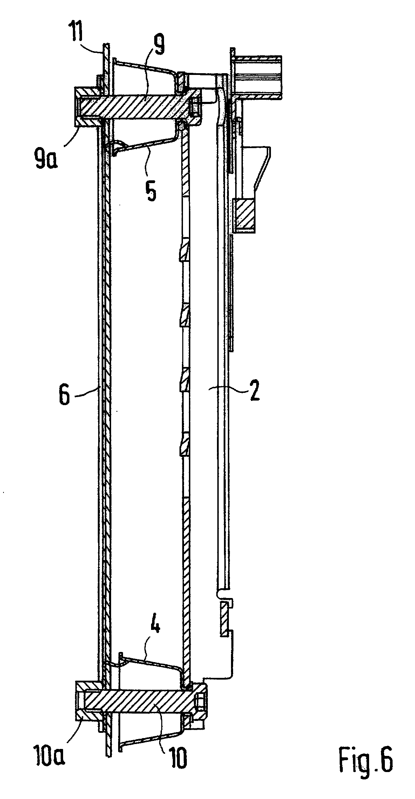

In den Ausführungen gemäß der Fig. 1 bis 4 ist die Rastschiene 2 an der Trägerplatte 3 befestigt. Nach einer weiteren Ausführung gemäß der Fig. 5 und 6 entfällt die Trägerplatte 3 und die Deformationselemente 4, 5 sind unmittelbar an der Rastschiene 2 und an der Säulenwand 11 abgestützt.

Die kegelförmig ausgeführten Deformationselemente 4, 5 sind mit ihrem kleinen Durchmesser der Rastschiene 2 oder nach einer weiteren Ausführung der Trägerplatte 3 zugerichtet, wobei der größere Durchmesser der Deformationselemente 4, 5 an der Säulenwand 11 bzw. an der Fläche F2 der Säulenwand 11 anliegt.

Denkbar sind auch Deformationselemente in Form von Federsystemen, die beispielsweise Tellerfedern oder Druckfedern, was nicht näher dargestellt ist. Die Deformationselemente können nicht nur endseitig der Rastschiene 2 bzw. der Trägerplatte 3 angeordnet sein, sondern sich auch über die gesamte Länge erstrecken, wobei mehr als zwei Deformationselemente möglich sind.

Wie in den Figuren 1, 3 und 4 näher gezeigt ist, kann das kegelförmige Deformationselement 4, 5 mittels einer Um- bzw. Einbörtelung in einer Bohrung der Rastschiene 2 oder der Trägerplatte 3 gehalten werden, so daß eine auswechselbare Baueinheit herstellbar ist.

## Patentansprüche

1. Vorrichtung für einen Gurthöhenversteller eines Sicherheitsgurtsystems, die in eingebautem Zustand an einer Säulenwand (11) einer Fahrzeugsäule (S) angeordnet ist und eine Rastschiene (2) sowie Deformationselemente (4, 5) umfasst, wobei zwischen der Rastschiene (2) des Gurtsystems und der Säulenwand (11) mindestens ein Deformationselement (4, 5) angeordnet und an der Befestigungsplatte (6) gehalten ist, **dadurch gekennzeichnet, daß** die Vorrichtung weiter eine Befestigungsplatte (6) aufweist, daß die Rastschiene (2) mit einer Trägerplatte (3) verbunden ist und diese unter Zwischenschaltung von beabstandet zueinander angeordneten kegelförmig ausgebildeten Deformationselementen (4, 5) über die Befestigungsplatte (6) an einer Fläche (F2) der Säulenwand (11) des Fahrzeugaufbaus abgestützt gehalten wird und die Befestigungsplatte (6) in einer montierten Betriebsstellung (I) anliegend an einer zur Fläche (F2) der Säulenwand (11) abgekehrten Fläche (F1) und in einer Stellung (II) nach einem Kopfaufprall losgelöst von dieser Fläche F1 in einem Freiraum (12) der Säule (S) hineinwandernd angeordnet ist.

2. Vorrichtung nach Anspruch 1, **dadurch gekennzeichnet, daß** die jeweils zwischen der Trägerplatte (3) und der Säulenwand (11) angeordneten Deformationselemente (4, 5) von Befestigungsschrauben (9, 10) durchsetzt sind und an Schweißmuttern (9a, 10a) der Befestigungplatte (6) gehalten werden.

3. Vorrichtung nach Anspruch 1, **dadurch gekennzeichnet, daß** zwischen der Rastschiene (2) und der Säulenwand (11), bei Entfall der Trägerplatte (3), die Deformationselemente (4, 5) angeordnet sind.

4. Vorrichtung nach den Ansprüchen 1, 2 oder 3, **dadurch gekennzeichnet, daß** die Deformationselemente (4, 5) mit ihrem kleineren Durchmesser der Trägerplatte (3) oder der Rastschiene (2) und mit ihrem größeren Durchmesser der Säulenwand (11) oder der Fläche (F2) zugerichtet sind.

5. Vorrichtung nach den Ansprüchen 1, 2, 3 oder 4, **dadurch gekennzeichnet, daß** die Deformationselement (4, 5) mit der Trägerplatte (3) oder der Rastschiene (2) mittels eines im Grund des Deformationselements (4; 5) vorgesehenen Umbördelung in einer Bohrung der Trägerplatte (3) oder der Rastschiene (2) gehalten sind.

## Claims

1. A device for a belt-height-adjustment means of a seat-belt system, which device in the fitted state is arranged on a column wall (11) of a vehicle column (**S**) and comprises a catch rail (2) and deformation elements (4, 5), wherein at least one deformation element (4, 5) is arranged between the catch rail (2) of the belt system and the column wall (11) and is held on the fastening plate (6), **characterized in that** the device additionally comprises a fastening plate (6), the catch rail (2) is connected to a carrier plate (3) and the said carrier plate (3) is held supported by way of the fastening plate (6) on a face (**F2**) of the column wall (11) of the vehicle body with the interposition of conical deformation elements (4, 5) arranged at a distance from one another, and in a mounted operating position (**I**) the fastening plate (6) is arranged so as to rest against a face (**F1**) remote from the face (**F2**) of the column wall (11) and in a position (**II**), released from the said face **F1** after a head impact, it is arranged so as to enter a free space (12) in the column (**S**).

2. A device according to Claim 1, **characterized in that** the deformation elements (4, 5) arranged in each case between the carrier plate (3) and the column wall (11) are traversed by fastening bolts (9, 10) and are held on weld nuts (9a, 10a) of the fastening plate (6).

3. A device according to Claim 1, **characterized in that** the deformation elements (4, 5) are arranged between the catch rail (2) and the column wall (11) in the absence of the carrier plate (3).

4. A device according to Claims 1, 2 or 3, **characterized in that** the deformation elements (4, 5) are directed with their smaller diameter towards the carrier plate (3) or the catch rail (2) and with their larger diameter towards the column wall (11) or the face (**F2**).

5. A device according to Claims 1, 2, 3 or 4, **characterized in that** the deformation elements (4, 5) are held by the carrier plate (3) or the catch rail (2) by means of a flanging - provided in the base of the deformation element (4; 5) - in a bore in the carrier plate (3) or the catch rail (2).

## Revendications

1. Dispositif pour un organe de réglage en hauteur de la ceinture d'un système de ceinture de sécurité, qui, à l'état monté, est disposé sur une paroi de montant (11) d'un montant de véhicule (S) et comprend un rail d'accrochage (2) ainsi que des éléments de déformation (4, 5), au moins un élément de déformation (4, 5) étant disposé entre le rail d'accrochage (2) du système de ceinture et la paroi de montant (11), et étant maintenu sur la plaque de fixation (6), **caractérisé en ce que** le dispositif comporte en outre une plaque de fixation (6), **en ce que** le rail d'accrochage (2) est relié à une plaque porteuse (3) et celle-ci est maintenue, soutenue sur une surface (F2) de la paroi de montant (11) de la carrosserie du véhicule, par interposition d'éléments de déformation (4, 5), de forme conique, disposés à distance l'un de l'autre, par l'intermédiaire de la plaque de fixation (6), et la plaque de fixation (6) est disposée de manière à se déplacer dans un espace libre (12) du montant (S), appliquée contre une surface (F1) tournée à l'opposé de la surface (F2) de la paroi de montant (11), dans une position de fonctionnement montée (I), et détachée de cette surface (F1) dans une position (II) après un choc de la tête.

2. Dispositif selon la revendication 1, **caractérisé en ce que** les éléments de déformation (4, 5), disposés chacun entre la plaque porteuse (3) et la paroi de montant (11), sont traversés par des vis de fixation (9, 10) et sont maintenus sur des écrous soudés (9a, 10a) de la plaque de fixation (6).

3. Dispositif selon la revendication 1, **caractérisé en ce que** les éléments de déformation (4, 5) sont disposés entre le rail d'accrochage (2) et la paroi de montant (11), en cas de suppression de la plaque porteuse (3).

4. Dispositif selon les revendications 1, 2 ou 3, **caractérisé en ce que** les éléments de déformation (4, 5) sont orientés par leur plus petit diamètre vers la plaque porteuse (3) ou le rail d'accrochage (2), et par leur plus grand diamètre vers la paroi de montant (11) ou la surface (F2).

5. Dispositif selon les revendications 1, 2, 3 ou 4, **caractérisé en ce que** les éléments de déformation (4, 5) avec la plaque porteuse (3) ou le rail d'accrochage (2) sont maintenus par un bord rabattu, prévu dans le fond de l'élément de déformation (4, 5), dans un perçage de la plaque porteuse (3) ou du rail d'accrochage (2).
